# EUROPEAN PATENT APPLICATION

(11) **EP 1 732 090 A1**
(43) Date of publication of application: **13.12.2006**
(21) Application number: 05727928.3
(22) Date of filing: 30.03.2005
(51) Int. Cl.: H01F 41/02, B28B 3/02, B30B 11/00, B30B 11/02, C04B 35/622, H01F 1/113

(54) **MAGNETIC FIELD FORMING DEVICE, FERRITE MAGNET PRODUCING METHOD, AND MOLD**

(30) Priority: 31.03.2004 JP 2004103415; 27.12.2004 JP 2004375507
(71) Applicant: TDK Corporation, Chuo-ku, Tokyo 103-8272 (JP)
(72) Inventor: MASUZAWA, Kiyoyuki; C/O TDK CORPORATION;, Chuo-ku, Tokyo 1038272 (JP); KURITA, Hideo; C/O TDK CORPORATION;, Chuo-ku, Tokyo 1038272 (JP); OHTSUKA, Masayuki; C/O TDK CORPORATION;, Chuo-ku, Tokyo 1038272 (JP); NAGATSUKA, Yasuhiro; C/O TDK CORPORATION;, Chuo-ku, Tokyo 1038272 (JP); TAGUCHI, Hitoshi; C/O TDK CORPORATION;, Chuo-ku, Tokyo 1038272 (JP)
(74) Representative: HOFFMANN EITLE
(86) International application number: PCT/JP2005/006026
(87) International publication number: WO 2005/096331

(57) **Abstract**

The objects of the present invention are to provide a magnetic field molding device, and method for producing a ferrite magnet, or the like, capable of improving yield in a production line and stabilizing product quality, and method for producing a ferrite magnet.

In molding in a magnetic field, the mortar-shaped die 19 provided with a plurality of the cavities 13 is heated by the heater member 20 at a given temperature level, under the control of the controller 23. The temperature level is preferably controlled by the controller 23 at 40°C or higher as mortar-shaped die 19 temperature T1, sensed by the sensor 22. A molding slurry can be kept at a high temperature level in the cavities 13 by heating the mortar-shaped die 19, and can have high dehydration properties and improve product yield.

## Description

### Technical Field

The present invention relates to a magnetic field molding device, method for producing a ferrite magnet, and die which can be used for them.

### Background Art

Ferrite (sintered) magnets as prevailing magnets are produced by a series of steps of calcining a rawmaterial mixture with a given composition into a ferrite state, milling the resulting calcined body into a fine ferrite powder of submicron size, compression-molding the powder using a die in a magnetic field (hereinafter referred to as magnetic field molding), and sintering the molded body into a ferrite magnet.

The processes for magnetic field molding fall into two general categories; dry process wherein the powder is molded as a dried material and wet process wherein the powder is molded as a slurry.

The wet magnetic field molding involves a problem of decreased production yield resulting from cracking or the like of the molded body, unless the slurry is dehydrated enough to remove its water content.

Therefore, there has been proposed a technique for improving the dehydration properties of the slurry in which the slurry be heated before it is injected into a die to reduce its viscosity and thereby to improve its dehydration properties, as disclosed in, e.g., Patent Documents 1, 2 and 3.

Patent Document 1 proposes a technique in which a heating device for heating a slurry is provided between a die assembly and a pressure pump for pumping the slurry to the die assembly.

This technique, however, which uses an electric heater tube or water bath as the heating device, involves a problem of needing a long heating time. Patent Document 2, in an attempt to solve the above problem, proposes a technique in which microwaves are used to uniformly heat the slurry in a shorter time.

Patent Document 3 proposes the following techniques. That is, the slurry in a tank is directly heated by a pipe heater or the like before being injected into the die; or indirectly heated by hot water or the like circulating over the tank; or the slurry is flowing in a pipe connecting the tank to the die, into which it is to be automatically injected, and the slurry is heated by heating the pipe periphery. Thereby, the slurry is kept from 40 through 90°C.
[Patent Document 1] Japanese Patent Publication No. 1-54167 (Claims)
[Patent Document 2] Japanese Patent Laid-Open No. 6-182728 (Claim 1)
[Patent Document 3] Japanese Patent Publication No. 2-13924 (Claims and page 3)

### Disclosure of the Invention

### Problems to be solved by the invention

However, the inventors of the present invention have found that injection of the heated slurry into a die causes problems resulting from decreased temperature of the slurry and consequently increased viscosity of its dispersion medium, because it is quenched by the die or the like.

The technique disclosed by Patent Document 3 has the essence of keeping the slurry from 40 through 90°C in a die, for which it is heated while it is held in a tank before being sent to the die directly by a pipe heater of the like or indirectly by hot water or the like circulating over the tank, or while it is flowing in a pipe to the die, into which it is to be automatically injected, by heating the pipe periphery, as described above. It is however practically difficult to keep the slurry from 40 through 90°C in a die by the above-described heating procedure,becauseit is quenched when injected into the die, as described above. This has been experimentally confirmed.

These problems are particularly noted in such a case where a larae-size die is used for providing a plurality of cavities therein, etc, in order to produce a plurality of molded bodies by one die, because the heat capacity of such a die is very large. In these cases, the conventional techniques are difficult to effectively solve the problem of cracking of molded bodies. Moreover, in a die provided with a plurality of cavities, slurry temperature may fluctuate cavity by cavity, depending on their positions in the die. This may cause fluctuation of dehydration properties of the slurry, cavity by cavity, and eventually density itself of the finally obtained molded bodies.

In addition, die temperature may change with ambient temperature and consequently viscosity of the dispersion medium in the slurry may change in a die, season by season, not to stabilize product quality.

The present invention has been developed to solve these technical problems. The objects of the present invention are to provide a magnetic field molding device, capable of improving yield in a production line and stabilizing product quality, method for producing a ferrite magnet and the like.

### Means for solving the problems

The present invention provides a magnetic field molding device used in producing a ferrite magnet to solve the above problems, comprising a die into which a molding slurry, produced by dispersing a powder mainly composed of ferrite in a dispersion medium, is injected to be compression-molded; a magnetic field generating source which applies a magnetic field in a given direction to the slurry in the die; and a temperature control unit for controlling die temperature.

The temperature control unit can comprise a heater provided in the die for heating the die and a controller for controlling the heater. Alternately, the temperature control unit can also be constructed so as to comprise a flow path provided in the die, a pump for sending the liquid medium into the flow path and a heat source for heating the liquid medium.

The molding device can control slurry temperature by heating the die by the temperature control unit or the like to reduce viscosity of its dispersion medium and thereby to keep dehydration properties of the slurry at a high level during the magnetic field molding process.

The die is preferably kept from 40 through 120°C by the temperature control unit, more preferably from 40 through 100°C, still more preferably from 40 through 80°C.

The above configuration is particularly effective for a large-size die or a die provided with a plurality of cavities for producing a plurality of ferrite magnets by one die.

When provided with a path for injecting the molding slurry into the individual cavities, the die can provides heat beforehand to the molding slurry while it is flowing in the delivery path towards the cavities.

The present invention can also be considered to be a method for producing a ferrite magnet. This method can comprise a molding step in which a slurry, e.g., that produced by dispersing a powder mainly composed of ferrite in a dispersion medium, is injected into a die kept from 40 through 120°C, to be compression-molded in a magnetic field of a given direction to obtain a molded body; and a sintering step in which the molded body is sintered into a ferrite magnet. It is preferable, also in this case, to keep the die from 40 through 100°C, more preferably from 40 through 80°C.

The present invention can also be considered to be a method for producing a ferrite magnet, comprising a slurry producing step in which a powder mainly composed of ferrite are dispersed in a dispersion medium to produce a molding slurry; a molding step in which the molding slurry with the dispersion medium controlled to have a viscosity of 0.70 [mPa·s] or less is compression-molded in a magnetic field of a given direction using a die; and a sintering step in which the molded body is sintered into a ferrite magnet. The dispersion medium is more preferably at a viscosity of 0.65 [mPa·s] or less.

It is preferable to keep the dispersion medium at a viscosity of 0.70 [mPa·s] or less by heating the die in the molding step thereby heating the molding slurry injected into the die.

The die of the present invention is used to compression -mold a molding slurry in which a powder mainly composed of ferrite is dispersed in a dispersion medium to produce a molded body of a given shape in the ferrite magnet production process. It is characterized by being provided with one or more cavities for obtaining a molded body, delivery path for injecting the molding slurry, supplied from the outside of the die, into the individual cavity (cavities) and a heater-holding mechanism provided to hold a heater for heating the die. The heater-holding mechanism is not structurally limited, but is preferably in the form of concavity, e.g., groove or hole, through which the heater is inserted into the die.

The die can have a heater assembled in the heater-holding mechanism, i.e., built-in type heater.

The die of the present invention can also be characterized by being provided with a liquid medium flow path in which the liquid medium can be heated by an external heat source to give a heat to the die when the liquid medium flows through the flow path.

In the die structure provided with a plurality of cavities, the delivery path preferably has a volume at least the same as the volume of molding slurry to be injected into a plurality of the cavities for one molding cycle, wherein the molding slurry volume for one molding cycle is a volume of a molding slurry including the materials corresponding to a total weight (dry basis) of the molded bodies produced by one molding cycle. This allows the slurry tobe totallyheatedbefore it is injected into the cavities while the slurry previously charged in the cavities is compression-molded.

Moreover, the heater-holding mechanism is preferably provided along the delivery path. This allows the slurry flowing in the delivery path to be efficiently heated, when the heater is set in the heater-holding mechanism.

Still more, when a plurality of cavities are provided in the die, the individual delivery paths are preferably designed in such a way to have an almost equal length towards the individual cavities, thereby the slurry to be injected into the individual cavities can be uniformly heated.

### Effects of the invention

The present invention heats a slurry to be injected into a die by controlling temperature of the die to reduce viscosity of the dispersion medium in the slurry. This allows the slurry to keep its dehydration properties at a high level during the molding process in a magnetic field, and to be efficiently dehydrated even in a large-size die or die provided with a plurality of cavities for producing many ferrite magnets by one die, to bring favorable effects, e.g., improved and stabilized product quality resulting from equalized density of the finally obtained molded body, reduced defective products, and improved yield in the production process.

### BRIEF DESCRIPTION OF THE DRAWINGS

FIG. 1 illustrates a process flow in one embodiment for producing a ferrite magnet;
FIG. 2 illustrates an arrangement of the heaters in the molding device provided with a plurality of cavities;
FIG. 3 is a cross-sectional view showing a part of the molding device;
FIG. 4 illustrates another embodiment of the delivery path provided in the die;
FIG. 5 illustrates a structure of another heater provided in the molding device;
FIG. 6 shows the relationship between slurry temperature and cavity internal pressure;
FIG. 7 shows the relationship between die temperature and cavity internal pressure;
FIG. 8 shows the relationship between temperature and viscosity of the dispersion medium;
FIG. 9 shows the temperature and internal pressure in the cavity, with respect to Examples 1, 2 and 3, and Comparative examples 1, 2 and 3; and
FIG. 10 shows the relationship between die heating temperature and occurrence rate of defects.

### Best Mode for Carrying Out the Invention

The present invention is described in detail based on the embodiments by referring to the attached drawings.

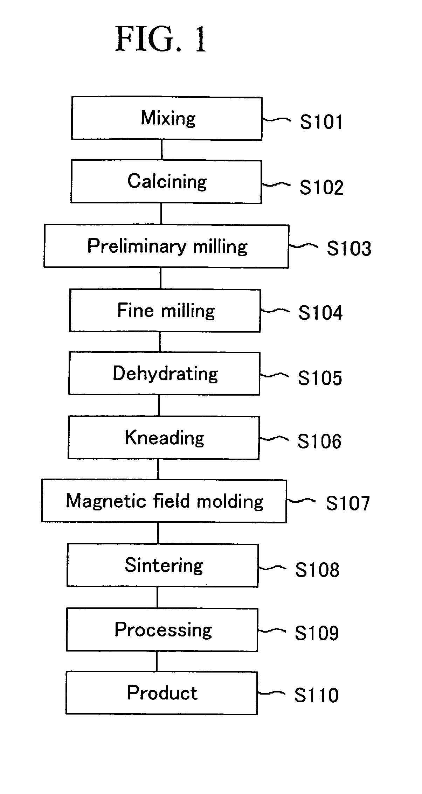

FIG. 1 illustrates one example of the process flow for producing a ferrite magnet. It is to be understood, needless to say, that the following embodiments are merely to aid in the understanding of the invention, and variations may be made, as required, without departing the sprit and scope of the invention.

As shown in FIG. 1, in order to produce a ferrite magnet, the raw materials are first mixed to have a given composition and calcined into a ferrite state (Steps S101 and 102). The raw materials include powdered oxides, and powdered compounds which can be sintered into a corresponding oxide, e.g., carbonates, hydroxides and nitrates. The calcination can be generally carried out in an oxidative atmosphere, e.g., air.

Next, the calcined body is milled by a preliminary milling step (Step S103) to produce a calcined powder composed of ferrite particles. It is then milled to a submicron size by a fine milling step (Step S104), after being added additives, as required, to produce a fine powder mainly composed of magnetoplumbite type ferrite. The preliminary and fine milling steps may be carried out by a wet or dry process. It is however preferable that the preliminary milling step is carried out by a dry process and fine milling step is carried out by a wet process, because the calcined body is generally composed of granules. In the above case, the calcined body is preliminarily milled to a given size or less in the preliminary milling step, and then made up into slurry with water and finely milled to a given size or less in the fine milling step.

Then, the finelymilledpowder is dispersed in a dispersion medium to produce the slurry (molding slurry) of given concentration, and the slurry is molded in a magnetic field. When the fine milling step is carried out by a wet process, the slurry may be concentrated in a dehydrating step (Step S105) to a given concentration.

The suitable dispersion media include water and liquids having a viscosity of 0.70 [mPa·s] or less at normal temperature (20°C). These liquids include hexane, toluene, p-xylene and methanol or the like. Other dispersion media may also be used, so long as they have a viscosity of 0.70 [mPa·s] or less when injected into a heated die mentioned below.

The slurry is kneaded in Step S106, and injected into a die, where it is compression-molded in a magnetic field of a given direction in Step S107.

The molded body is sintered into the ferrite magnet in Step S108. It is then processed into a given shape to produce the ferrite magnet as the final product in Steps S109 to S110.

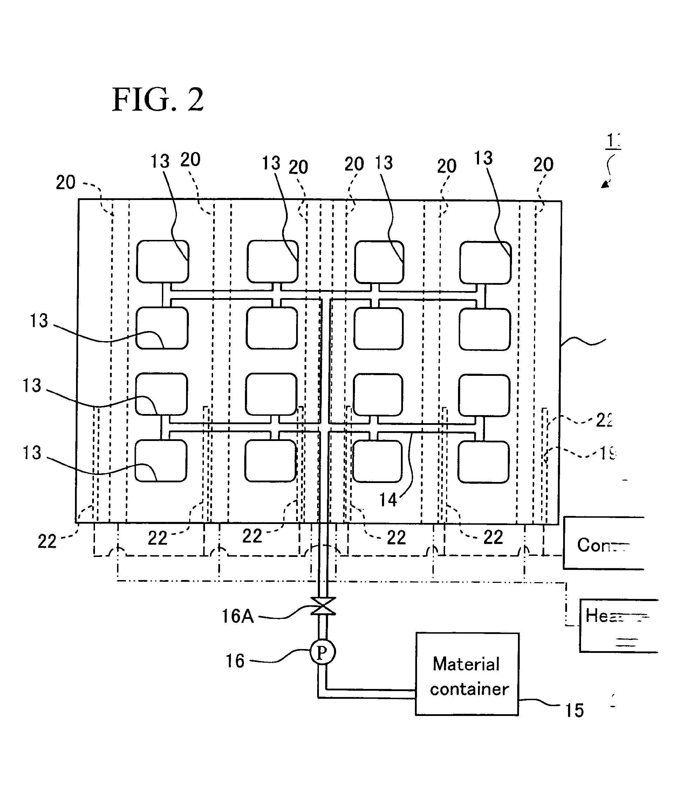

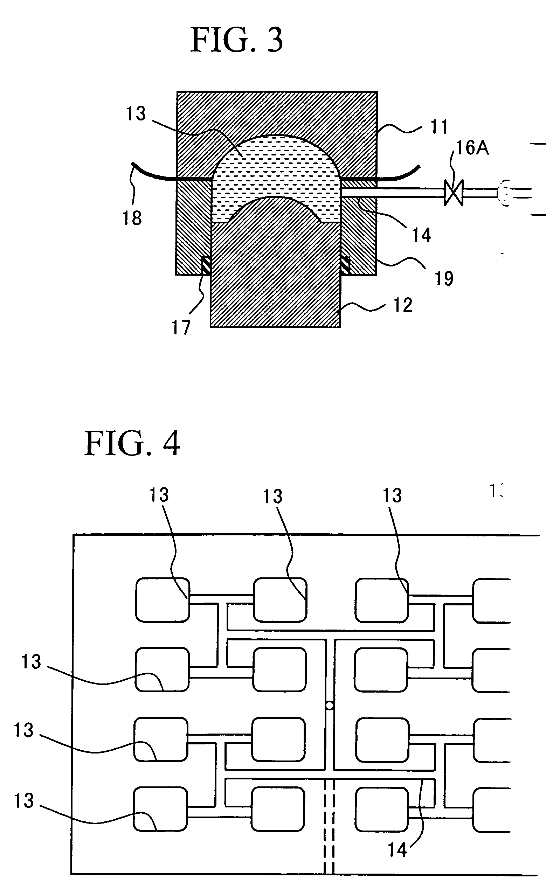

FIGS. 2 and 3 outline a structure of magnetic fieldmolding device 10 used in the above-mentioned Step S107, i.e., molding step in a magnetic field.

The magnetic field molding device 10 compression-molds a slurry of given concentration in a magnetic field to orient the ferrite particles to produce the molded body of given shape. As shown in FIG. 2, the magnetic field molding device 10 is provided with a plurality of cavities 13 for producing a plurality of molded bodies by one die.

FIG. 3 is a cross-sectional view of the magnetic field molding device 10, in which one cavity 13 is closed up. As shown, it is provided with 3 types of dies, upper die 11, lower die 12 and mortar-shaped die 19. At least one of the upper die 11 and lower die 12 is driven by a driving source, e.g., driving cylinder (not shown), in such a way that they come closer to or away from each other. In this embodiment, the lower die 12 moves vertically relative to the upper die 11 at a given stroke.

The mortar-shaped die 19 may also be stationary or vertically movable.

As illustrated in FIG. 2, the mortar-shaped die 19 is provided with the delivery path 14 which sends the slurry to the individual cavities 13. It distributes the slurry, supplied from the external material container 15 by the pump 16 when the valve 16A is open, to the individual cavities 13 into which it is injected. The delivery path 14 preferably has a total volume at least the same as the total volume of the cavities 13, i.e., as the slurry volume to be injected into a plurality of the cavities for one molding cycle.

In addition, as shown in FIG. 4, the individual delivery paths 14 in the mortar-shaped die 19 are preferably designed in such a way to have an almost equal length towards the individual cavities 13. This allows the slurry to be uni formly heated while it is flowing towards the individual cavities 13. Therefore, the delivery path 14 is branched off at the die center towards the individual cavities 13 to run an almost equal distance.

As shown in FIG. 3, each of the lower dies 12 compression-molds the slurry at the stroke end into a given shape in the cavity 13. The mortar-shaped die 19 is provided with the sealing member 17 with which the gap between itself and a lower die 12 is sealed.

The filter cloth 18 is provided over the mating surfaces between the upper die 11 and mortar-shaped die 19, to discharge moisture in the slurry from the cavity 13. It allows moisture in the slurry to trickle from the mating surfaces between the upper die 11 and mortar-shaped die 19 to the outside.

A magnetic field generating coil (not shown) or the like is provided in the vicinity of the upper die 11, to apply the magnetic field to the slurry in a given direction.

As shown in FIG. 2, the mortar-shaped die 19 of this embodiment is each provided with the concavity 19a (heater-holding mechanism) at a given position, in which the heater member 20, composed of an electrically heating wire, ceramic heater or the like, is set. The heater members 20 are preferably arranged in a pattern designed to uniformly heat each of the cavities 13.

Moreover, the concavities 19a are preferably arranged along the delivery path 14. This allows the heater members 20, set in the concavities 19a, to efficiently heat the slurry flowing in the delivery path 14.

The heater member 20 is connected to the heater power source 21. The heater member 20 generates heat, when a voltage is applied thereto from the heater power source 21, to heat the mortar-shaped die 19. The heater member 20 and heater power source 21 constitute the heater.

Still more, the sensor 22 of thermocouples or the like is provided to sense the temperature of the mortar-shaped die 19, and the controller 23 is also provided to control the heater power source 21 based on temperature sensed by the sensor 22.

The example of heating the mortar-shaped die 19 is described above. However, the die can be structured to heat the upper die 11 or the lower die 12 in a similar manner.

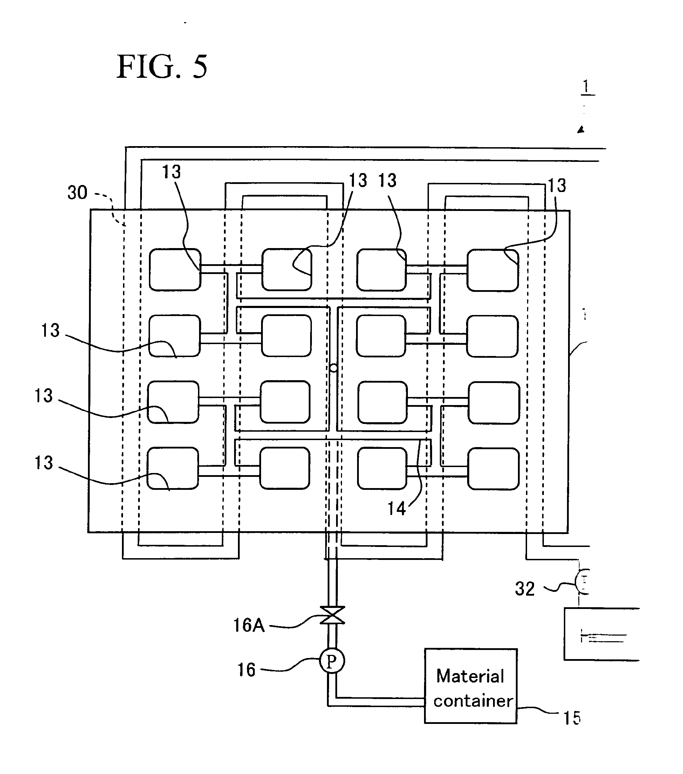

As the heater, it may employ a construction in which a liquid medium is heated. In this case, the mortar-shaped die 19 is provided with the flow path 30 for supplying the liquid medium, in place of the heater member 20, as shown in FIG. 5. It is also provided with the heat source 31 to heat the liquid medium in place of the heater power source 21, where the liquid medium heated by the heat source 31 is sent into the flow path 30 by the pump 32. In the above structure, the flow path 30 in which the liquid medium flows and heat source 31 constitute the temperature control unit.

In the magnetic field molding device 10 of the above structure, the slurry kneaded in the above-mentioned Step S106 is distributed/supplied by the pump 16 from the material container 15 to each of the cavities 13 between the upper die 11 and the lower die 12 via the delivery path 14. When the cavities 13 are filled with a given quantity of the slurry, the lower die 12 is driven to press the slurry at a given pressure between the upper die 11 and the lower die 12, while a magnetic field generated by the magnetic field generating coil (not shown) or the like is applied to the slurry. This molds the slurry into a given shape while it is dehydrated, with moisture in the slurry trickling to the outside via the filter cloth 18.

On completion of the molding, the upper die 11 is opened to release the molded body formed into a given shape from the lower die 12.

In the molding in a magnetic field, described above, the mortar-shaped die 19 is heated (regulated) by the heater member 20 to a given temperature level under the control by controller 23. It is preferable to keep the mortar-shaped die 19 at 40°C or higher as temperature T1 sensed by the sensor 22. If the temperature T1 of the mortar-shaped die 19 is lower than 40°C, it is difficult to assuredly realize the slurry heating effect. If the temperature T1 of the mortar-shaped die 19 is more higher than 120°C, on the other hand, moisture in the slurry may boil, although depending on the cavity 13 internal pressure, i.e. , slurry pressure. Therefore, the upper limit of temperature T1 of the mortar-shaped die 19 is preferably at 120°C or lower, more preferably at 100°C or lower, still more preferably at 80°C or lower. It is therefore preferable to control heater power source 21 by the controller 23, based on the temperature level sensed by the sensor 22.

When, for example, the mortar-shaped die 19 is heated to T1 of 50°C, slurry temperature T2 will be at 43°C in the cavity 13. T2 will be at 49°C at T1 of 60°C.

Heating the mortar-shaped die 19 can increase slurry temperature in the cavity 13 more assuredly than heating the slurry before it is injected into the die, and consequently more efficiently reduces viscosity of the dispersion medium in the slurry and improves the dehydration properties of the slurry, thereby improving product yield. As discussed above, the cavities 13 can be uniformly heated even in a die provided with a plurality of cavities 13 or large-size die, to equalize density itself of the molded body as a result. Moreover, heating the mortar-shaped die 19 makes the magnetic field molding device 10 less sensitive to seasonally fluctuating ambient temperature, allowing it to produce a ferrite magnet of stable quality.

FIG. 2 shows the magnetic field molding device 10 in which the number of the cavity 13 is 16, however, the number of the cavity 13 is not specially limited. For example, it may be between 8 or more and several tens or less. Even in a case where the number of the cavity 13 is relatively large, injecting a slurry into a previously heated die can improve product yield, because slurry temperature rarely fluctuates cavity by cavity, depending on their positions in the die and density dispersions of the final molded bodies are reduced.

Moreover, the mortar-shaped die 19 is provided with the delivery path 14, by which the slurry is supplied to fill the cavities 13. The mortar-shaped die 19 is heated by the heater member 20, and the slurry is also heated while it is flowing in the delivery path 14. In other words, the slurry can be heatedbeforebeing injected into the cavities 13. As a result, slurry temperature T2 in the cavities 13 can be increased. The heater member 20 for heating the mortar-shaped die 19 also works as the heat source for the slurry flowing in the delivery path 14, dispensing with any additional heat source to obtain the effects with simplifying the structure. In particular, the total volume of the delivery path 14 is set to be at least the same as the slurry volume to be injected for one molding cycle, and the slurry can be assuredly and efficiently heated in the delivery path 14 before being injected into the cavities 13 while the previous charge is molded in the cavities 13 and the above-mentioned effects are assuredly obtained. When, for example, 16 molded bodies each having a weight of 40 g (on a dry basis) are to be produced in one cycle, i.e., by the die provided with 16 cavities, the delivery path 14 preferably has a volume of 325 cm³ or more when the slurry has a concentration of 76% and density of 2.59 g/cm³.

When the total volume of the delivery path 14 is smaller than the slurry volume for one molding cycle, it is preferable to pre-heat the slurry by a heater or the like before it is sent into the delivery path 14 by the pump 16 from the material container 15.

### EXAMPLES

The relationship between slurry temperature and cavity internal pressure was investigated. The results are described below.

First, the molding slurry was prepared by the process flow illustrated in FIG. 1, where water was used as the dispersion medium for the slurry.

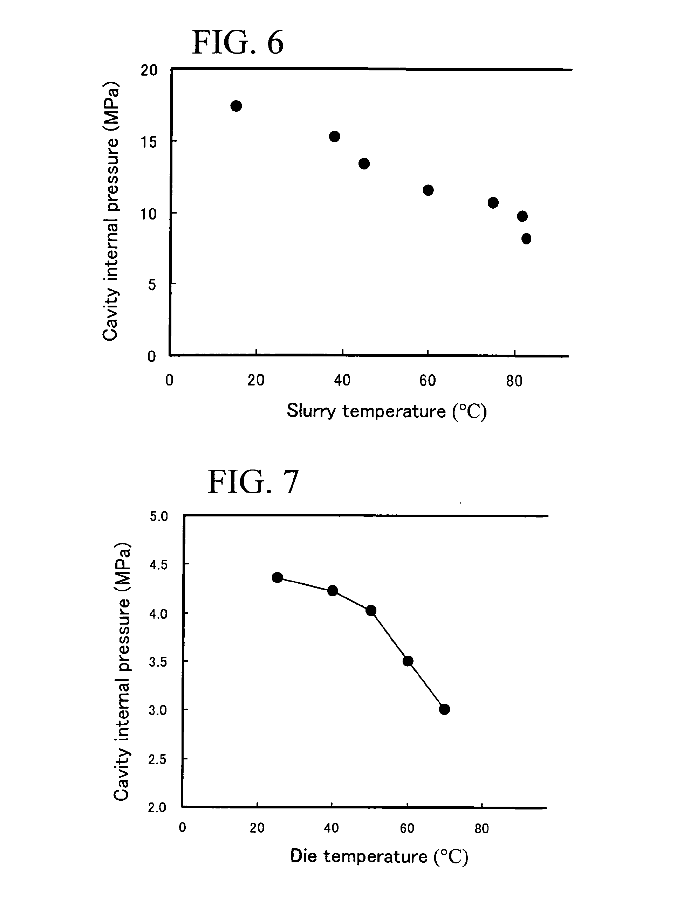

The slurry kept at a varying temperature level was injected into a disk-shape cavity (diameter: 30 mm) under constant conditions. Then, it was molded in a magnetic field under constant molding conditions, where the magnetic field molding device used was the same as the above-described magnetic field molding device 10, except that it was provided with one cavity (cavity 13), and provided with none of the heater member 20, heater power source 21, sensor 22 and controller 23. The highest pressure determined by a pressure sensor, provided in the close vicinity of the delivery path 14 and on the slurry injection route outside of the mortar-shaped die 19 was recorded as cavity internal pressure. The slurry was measured for its temperature 20 minutes after it was injected into the cavity, and was recorded as slurry temperature. Cavity internal pressure can be used as a measure of slurry dehydration properties; lower pressure being considered to indicate higher dehydration properties. The results are given in FIG. 6.

As illustrated in FIG. 6, it was confirmed that cavity internal pressure is decreased as slurry temperature is higher.

Next, the relationship between die temperature and cavity internal pressure was investigated. The results are described below.

First, the molding slurry (solid content in the slurry is 76%) was prepared by the process flow illustrated in FIG. 1, where water was used as the dispersion medium and a magnetoplumbite type strontium ferrite incorporated with predetermined amount of additives was used as the powder.

Then, the slurry was molded in a magnetic field using the magnetic field molding device 10, illustrated in FIG. 2, into a ferrite magnet of given shape (having an essentially arc-shape cross-section) and size, where temperature of the mortar-shaped die 19 was kept at 25°C (not heated), or 40, 50, 60 or 70°C by the heater member 20. Cavity internal pressure was measured by the procedure described above. The results are given in FIG. 7.

As shown in FIG. 7, increasing die temperature has an effect of decreasing cavity internal pressure. In order to realize the effect notably as compared to the non-heating case, however, die temperature is preferably set at above 40°C. At the same time, die temperature is preferably set at 100°C or lower, because water in the slurry may boil at above 100 to 120°C, although depending also on cavity internal pressure, i.e., slurry pressure.

Slurry temperature was at 36°C when die temperature was set at 40°C. The dispersion medium (water) had a viscosity of 0.70 [mPa·s] at the above temperature level.

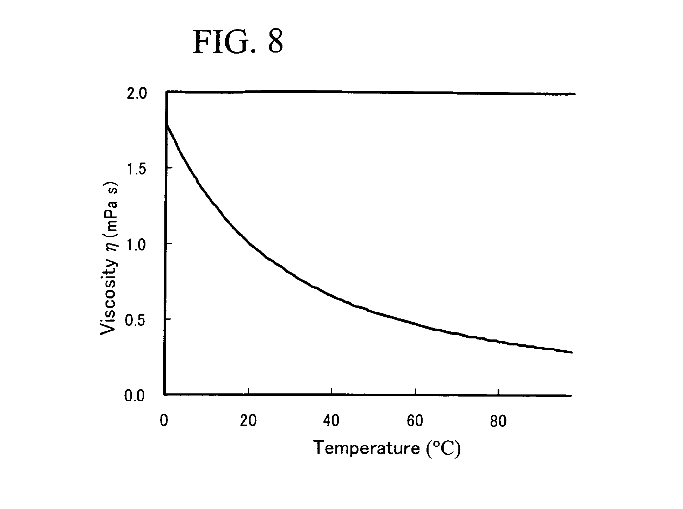

FIG. 8 shows the relationship between temperature and viscosity of the dispersion medium (water). Increasing temperature reduces the water viscosity and improves dehydration properties of the slurry. In other words, it can be said that cavity internal pressure decreases notably as viscosity of the dispersion medium (water) decreases to 0.7 [mPa·s] or less, furthermore to 0.65 [mPa·s] or less.

The present invention was compared with the conventional technique which heats the slurry beforehand. The results are described below.

First, a molding slurry (solid content in the slurry was 76%) was prepared by the process flow illustrated in FIG. 1, where water was used as the dispersion medium and a strontium ferrite incorporated with predetermined amount of additives was used as the powder.

Then, the slurry was molded into a ferrite magnet of given shape (having an essentially arc-shape cross-section) and size under the following conditions.
EXAMPLE 1): The slurry was molded in a magnetic field using the magnetic field molding device 10, illustrated in FIG. 2, into a molded body and the obtained molded body was sintered into a ferrite magnet, where temperature T1 of the mortar-shaped die 19 was kept at 50°C by the heater member 20.
EXAMPLE 2): The slurry was molded in a magnetic field using the magnetic field molding device 10 into a molded body and the obtainedmoldedbodywas sintered into a ferrite magnet, where temperature T1 of the mortar-shaped die 19 was kept at 60°C by the heater member 20.
EXAMPLE 3): The slurry was molded in a magnetic field using the magnetic field molding device 10 into a molded body and the obtained molded body was sintered into a ferritemagnet, where temperature T1 of the mortar-shaped die 19 was kept at 100°C by the heater member 20.
COMPARATIVE EXAMPLE 1) : The slurrywas molded in a magnetic field using the magnetic field molding device 10 into a molded body and the obtained molded body was sintered into a ferrite magnet, where the mortar-shaped die 19 was not heated by the heater member 20 and hence left at normal temperature.
COMPARATIVE EXAMPLE 2) : The slurrywas molded in a magnetic field using the magnetic field molding device 10 into a molded body and the obtained molded body was sintered into a ferrite magnet, where the mortar-shaped die 19 was not heated by the heater member 20 but the slurry was heated to 50°C by a heater provided over the hose by which the slurry was supplied to the die from the material container 15 (this corresponds to a conventional technique).
COMPARATIVE EXAMPLE 3) : The slurrywas molded in a magnetic field using the magnetic field molding device 10 into a molded body and the obtained molded body was sintered into a ferrite magnet, where the mortar-shaped die 19 was not heated by the heater member 20 but the slurry was heated to 70°C by a heater provided over the hose by which the slurry was supplied to the die from the material container 15 (this also corresponds to a conventional technique).

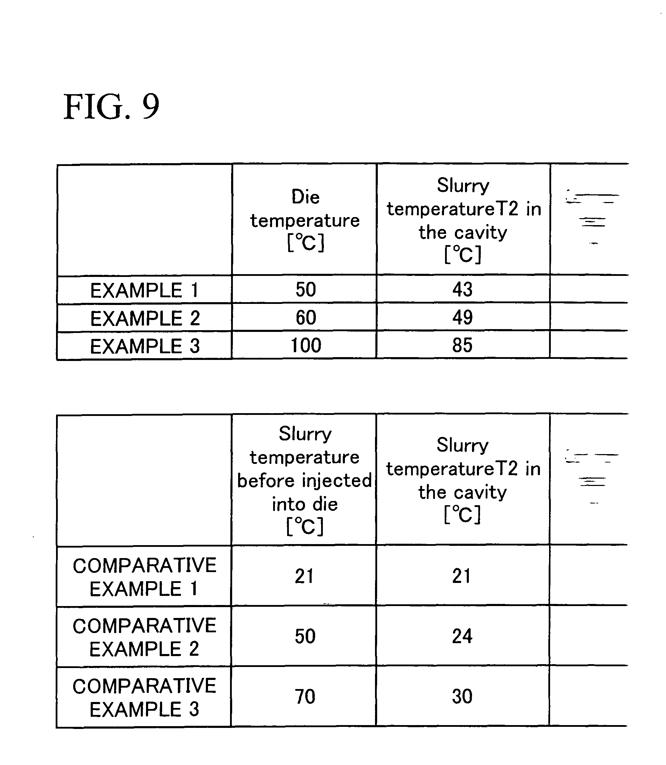

Slurry temperature T2 in the cavity 13 and cavity internal pressure were measured in each of EXAMPLES 1 to 3 and COMPARATIVE EXAMPLES 1 to 3. The results are given in FIG. 9.

As shown in FIG. 9, slurry temperature was higher in EXAMPLES 1 and 2, where the die was heated, than in COMPARATIVE EXAMPLE 1, where the die was not heated, as might be expected. It is also noted that the slurry showed a significantly decreased temperature when it was injected into the die in COMPARATIVE EXAMPLES 2 and 3, where it was heated beforehand. By contrast, the slurry temperature showed a significantly higher in EXAMPLES 1 and 2. As a result, it was confirmed that the slurry dispersion medium in the cavity 13 had a lower viscosity in EXAMPLES 1 and 2 than in COMPARATIVE EXAMPLES 1 to 3, as shown in FIG. 8.

It was also confirmed that cavity internal pressure was apparently lower in EXAMPLES 1 to 3 than in COMPARATIVE EXAMPLES 1 to 3, which coincides with the above results. Decreased pressure in the cavity indicates improved water releasing rate (i.e., dehydration properties), and allows the slurry to be molded in a shorter time.

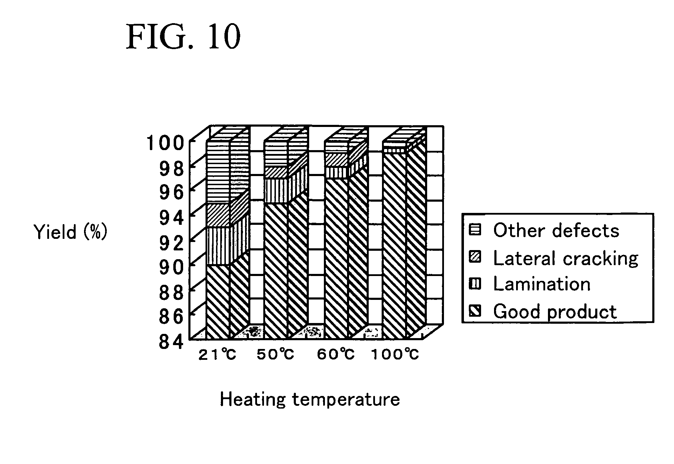

The ferrite magnets prepared were tested. The results are given in FIG. 10.

As shown in FIG. 10, EXAMPLES 1 to 3, where the die was heated, produced clearly decreased defective products showing circumferential cracks, laminations or the like than COMPARATIVE EXAMPLE 1, where the die was not heated. It was therefore confirmed that heating the die improvedproduct yield to about 95% or more, and improved water releasability, which led to improved product quality.

## Claims

1. A magnetic field molding device used in producing a ferrite magnet, comprising:
a die for compression-molding a molding slurry, wherein the slurry is produced by dispersing a powder mainly composed of ferrite in a dispersion medium and injected into the die,
a magnetic field generating source for applying a magnetic field to the slurry within the die in a given direction, and
a temperature control unit for controlling the temperature of the die.

2. The magnetic field molding device according to claim 1, wherein the temperature control unit comprises a heater provided in the die for heating the die and a controller for controlling the heater.

3. The magnetic field molding device according to claim 1, wherein the temperature control unit comprises a flow path provided in the die, a pump for sending a liquid medium into the flow path and a heat source for heating the liquid medium.

4. The magnetic field molding device according to claim 2, wherein the temperature control unit controls the temperature of the die from 40 through 120°C.

5. The magnetic field molding device according to claim 2, wherein the temperature control unit controls the temperature of the die from 40 through 100°C.

6. The magnetic field molding device according to claim 1, wherein the die is provided with a plurality of cavities for producing a plurality of the ferrite magnets.

7. The magnetic field molding device according to claim 6, wherein the die is provided with delivery paths for injecting the slurry into each of the cavities.

8. A method for producing a ferrite magnet, comprising:
a molding step in which a molding slurry produced by dispersing a powder mainly composed of ferrite in a dispersion medium is injected into a die kept from 40 through 120°C and the slurry is compression-molded in a magnetic field of a given direction to produce a molded body, and
a sintering step in which the molded body is sintered into a ferrite magnet.

9. A method for producing a ferrite magnet, comprising:
a slurry producing step in which a powder mainly composed of magnetoplumbite type ferrite are dispersed in a dispersion medium to produce a molding slurry,
a molding step in which the slurry having the dispersion mediumviscosity of 0.70 [mPa·s] or less is compression-molded in a magnetic field of a given direction to produce a molded body, and
a sintering step in which the molded body is sintered into a ferrite magnet.

10. The method for producing a ferrite magnet according to claim 9, wherein in the molding step, the dispersion medium in the molding slurry injected into the die is kept at a viscosity of 0.70 [mPa·s] or less by heating the die.

11. The method for producing a ferrite magnet according to claim 9, wherein the dispersion medium is water.

12. A die for compression-molding a molding slurry to form a molded body of a given shape in a production process of a ferrite magnet, wherein said slurry is produced by dispersing a powder mainly composed of ferrite in a dispersion medium, comprising:
a cavity (cavities) for forming the molded body,
a delivery path for injecting the slurry into the cavity (cavities) from the outside of the die, and
a heater-holding mechanism provided to hold a heater for heating the die.

13. The die according to claim 12, wherein the heater-holding mechanism is in the form of a concavity through which the heater is inserted into the die.

14. The die according to claim 12, wherein the heater is held in the heater-holding mechanism.

15. The die according to claim 12, wherein the heater-holding mechanism is provided along the delivery path.

16. A die for compression-molding a molding slurry to form a molded body of a given shape in a production process of a ferrite magnet, wherein said slurry is produced by dispersing a powder mainly composed of ferrite in a dispersion medium, comprising:
a cavity (cavities) for forming the molded body,
a delivery path for injecting the slurry into the cavity (cavities) from the outside of the die, and
a flow path for a liquid medium heated by an external heat source,
wherein the die can be heated by flowing the liquid medium through the flow path.

17. The die according to claim 12 or 16, wherein a plurality of the cavities are provided in the die, and the delivery path has a volume at least the same as the slurry volume to be injected into said plurality of the cavities for one molding cycle.

18. The die according to claim 12 or 16, wherein saidplurality of the cavities are provided in the die, and each of the individual delivery paths has an almost equal length towards the individual cavities.

19. The die according to claim 12 or 16, wherein the die has at least 8 cavities.
